# EUROPEAN PATENT APPLICATION

(11) **EP 4 852 112 A1**
(43) Date of publication of application: **09.12.2026**
(21) Application number: 25747642.4
(22) Date of filing: 21.01.2025
(51) Int. Cl.: H01M 10/04, H01M 4/70

(54) **BATTERY CELL, SECONDARY BATTERY, AND ELECTRIC DEVICE**

(30) Priority: 04.02.2024 CN 202410153511
(71) Applicant: Ningde Amperex Technology Limited, Ningde, Fujian 352100 (CN)
(72) Inventor: TAO, Xinghua, Ningde, Fujian 352100 (CN); MA, Wu, Ningde, Fujian 352100 (CN); ZHANG, Guowen, Ningde, Fujian 352100 (CN)
(74) Representative: Kraus & Lederer PartGmbB
(86) International application number: PCT/CN2025/073668
(87) International publication number: WO 2025/162070

(57) **Abstract**

This application discloses a battery cell, a secondary battery, and an electrical device. The battery cell includes a plurality of electrode plates. Each of the electrode plates includes a current collector and an active material coating. The electrode plate includes a first region covered with the active material coating and a second region not covered with the active material coating. The first region is provided with a clearance notch. The second region forms a tab of the battery cell. Among the plurality of stacked electrode plates, for two adjacent electrode plates, the first region of one of the electrode plates is provided with the clearance notch to expose the second region of the other electrode plate. A width of the electrode plate is W mm, an area of the clearance notch is S1 mm², an area of the second region is S2 mm², and a thickness of the battery cell is H. When H > 7 mm, a relationship S1 + S2 < A × W is satisfied, where A is 3.6 mm; or, when H ≤ 7 mm, a relationship S1 + S2 < B × W is satisfied, where B is 1.6 mm. With such a design, after a bare cell is formed by stacking, the tabs are accommodated within a main region of the bare cell, without requiring multi-tab intermediate-connection welding, thereby improving space utilization. In addition, by setting a maximum value of S1+S2, this application ensures an increase in the overall energy density of the battery cell.

## Description

### TECHNICAL FIELD

This application relates to the field of battery technology, and in particular, to a battery cell, a secondary battery, and an electrical device.

### BACKGROUND

A stacked-type battery cell is formed by laminating a plurality of positive and negative current collector units together using a lamination technology, such that current can flow through the current collector units in sequence. During the stacking, separators need to be applied between the current collectors for insulation and connection, so as to ensure that the current collectors can work cooperatively to stably provide electrical energy. The stacked structure enables the battery to operate as a multi-polar battery, thereby reducing the resistance of the battery itself. As a result, less heat is generated during charging or discharging, and the service life of the battery is longer.

In a stacked-type battery cell with a multi-tab design, a plurality of layers of bare foil need to be gathered in one direction and cut to form a tab group, and the tab group is then connected to an additional tab connecting piece. Such a tab structure design may result in a relatively large gap between an electrode assembly and a housing, thereby reducing the space utilization rate.

### SUMMARY

Some embodiments of this application are intended to provide a current collector, an electrode assembly, a battery cell, a secondary battery, and an electrical device to solve the technical problem of low space utilization of stacked-type battery cells in the related art.

Some embodiments of this application employ the following technical solution to solve the technical problem:
According to a first aspect of this application, this application discloses a stacked-type battery cell. The battery cell includes an electrode plate. The electrode plate includes a current collector and an active material coating. The electrode plate includes a first region covered with the active material coating and a second region not covered with the active material coating. The first region is provided with a clearance notch. The clearance notch is configured to avoid the second region of an adjacent current collector. The second region forms a tab of the current collector. Among the plurality of stacked electrode plates, for two adjacent electrode plates, the first region of one of the electrode plates is provided with the clearance notch to expose the second region of the other electrode plate. A width of the electrode plate is W mm, an area of the clearance notch is S1 mm², an area of the second region is S2 mm², and a thickness of the battery cell is H. When H > 7 mm, a relationship S1 + S2 < A × W is satisfied, where A is 3.6 mm; or, when H ≤ 7 mm, a relationship S1 + S2 < B × W is satisfied, where B is 1.6 mm.

In this way, after a bare cell is formed by stacking, the tabs are accommodated within a main region of the bare cell, without requiring multi-tab intermediate-connection welding outside the main region at the head position of the bare cell, thereby improving space utilization. In addition, by setting the maximum value of S1+S2 to be less than 3.6 W, this application ensures an increase in the overall energy density of the battery cell.

In one or more optional embodiments, H ≤ 7 mm, and S1 + S2 < C × W, where C is 1.0 mm. Implementing this structure in a battery cell with H ≤ 7 mm can ensure an increase in the overall energy density.

In one or more optional embodiments, an area S1 of the clearance notch is 5 mm² to 100 mm², and an area S2 of the second region is 5 mm² to 100 mm².

In one or more optional embodiments, an area S1 of the clearance notch is 10 mm² to 60 mm2, and an area S2 of the second region is 10 mm² to 60 mm².

In one or more optional embodiments, the electrode plate includes a plurality of corners. The clearance notch is provided at one of the corners of the electrode plate. The second region is located at another corner of the electrode plate. By arranging the clearance notch and the second region at different corners of the electrode plate, this application causes a part of the current collector, which is located at the corner, to serve as a tab, thereby reducing a gap between the electrode assembly and the packaging case of the battery cell, and increasing the energy density.

In one or more optional embodiments, the electrode plate is rectangular and includes a first side edge and a second side edge parallel to each other, a third side edge perpendicular to the first side edge, and a fourth side edge perpendicular to the second side edge. The clearance notch is located at a first corner formed by the first side edge and the third side edge. The second region is located at a second corner formed by the first side edge and the fourth side edge.

In one or more optional embodiments, a first direction parallel to the third side edge and a second direction parallel to the first side edge are defined for the current collector. A maximum dimension of the second region in the first direction is 1 mm to 15 mm, and a maximum dimension of the second region in the second direction is 1 mm to 15 mm. In the first direction, a distance from one end, adjacent to the third side edge, of the first side edge to the third side edge is 1 mm to 15 mm. In the second direction, a distance from one end, adjacent to the first side edge, of the third side edge to the first side edge is 1 mm to 15 mm. In this way, by limiting the size of the tab to a reasonable range, this application can avoid an excessively large size of the tab that reduces the energy density of the battery cell, and also prevent an excessively small size of the tab that results in low electrical connectivity.

In one or more optional embodiments, the maximum dimension of the second region in the first direction is 3 mm to 10 mm, and the maximum dimension of the second region in the second direction is 3 mm to 10 mm. In the first direction, a distance from one end, adjacent to the third side edge, of the first side edge to the third side edge is 3 mm to 10 mm. In the second direction, a distance from one end, adjacent to the first side edge, of the third side edge to the first side edge is 3 mm to 10 mm.

In one or more optional embodiments, the clearance notch and the second region are both in the shape of a polygon, where the number of line segments constituting the polygon is 3 to 8.

In one or more optional embodiments, the battery cell further includes an electrode assembly. The electrode assembly includes: a plurality of negative electrode plates, positive electrode plates, and separators that are stacked together, and each of the separators is located between a negative electrode plate and a positive electrode plate. Among the plurality of negative electrode plates, each negative electrode plate is formed by a current collector coated with a negative active material. When viewed along a thickness direction of the electrode assembly, a tab of the negative electrode plate is located at a first position, and the clearance notch provided in the negative electrode plate is located at a second position. Among the plurality of positive electrode plates, each positive electrode plate is formed by a current collector coated with a positive active material. When viewed along the thickness direction of the electrode assembly, a tab of the positive electrode plate is located at the second position, and the clearance notch provided in the positive electrode plate is located at the first position. Among the separators, when viewed along the thickness direction of the electrode assembly, each of the separators is provided with the clearance notch at both the first position and the second position. The plurality of negative electrode plates and positive electrode plates are alternately stacked together. Each of the separators is located between a negative electrode plate and a positive electrode plate. A plurality of tabs located at the same position form one tab group. In one of the tab groups, any two adjacent tabs contact each other in at least a part of a region between the two tabs to form an electrical connection.

In this way, after a bare cell is formed by stacking the negative electrode plates and the positive electrode plates, the tabs are accommodated within a main region of the bare cell, without requiring multi-tab intermediate-connection welding outside the main region at the head position of the bare cell, thereby improving space utilization. In addition, during mechanical abuse, the tab group formed by gathering the tabs is less prone to be subjected to impact, wobbling, or twisting, thereby avoiding safety problems such as short circuits between a tab and a current collector of the bare cell.

In one or more optional embodiments, the tab group is formed by inclining a plurality of tabs at the same position toward a thickness center of the electrode assembly. The thickness center is any point selected in a middle region of the electrode assembly, the middle region being far away from two side surfaces of the electrode assembly in the thickness direction.

In one or more optional embodiments, in the thickness direction, a distance between the tab group and one side surface of the electrode assembly falls within a range of 0.3T and 0.7T, where T is the thickness of the electrode assembly.

In one or more optional embodiments, for any tab in the tab group, an angle between the tab and a surface of a current collector of the electrode plate at which the tab is located is greater than 90°.

This arrangement can avoid a misalignment tolerance between adjacent tabs from causing an edge of a tab to warp outward. The warp results in poor contact between adjacent tabs, and impairs electrical conductivity of the tab group. By setting the angle to be greater than 90°, this application makes two adjacent tabs tend to be parallel to each other along a gathering direction, thereby achieving tighter contact between the tabs, reducing the resistance of the tab group, and improving charging and discharging efficiency.

According to a second aspect of this application, this application further discloses another battery cell. The battery cell includes: the electrode assembly described above; a packaging case, where the electrode assembly is accommodated in the packaging case; and at least two tab connecting pieces, where, one of the tab connecting pieces is electrically connected to one tab group of the electrode assembly, one end of the tab connecting piece is electrically connected to the tab group, and another end of the tab connecting piece extends out of the packaging case to form an electrical energy transmission channel.

In one or more optional embodiments, the tab connecting piece is disposed at one of the following positions: an upper surface of the tab group in a thickness direction; a lower surface of the tab group in the thickness direction; or, a position between any two adjacent tabs inside the tab group.

According to a third aspect of this application, this application further provides a secondary battery. The secondary battery includes a battery housing and the battery cell described above. The battery cell is accommodated in the battery housing.

According to a fourth aspect of this application, this application further discloses an electrical device. The electrical device includes the secondary battery described above.

Additional aspects and advantages of some embodiments of this application will be partly described or illustrated herein later or expounded through implementation of an embodiment of this application.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the drawings are not drawn to scale.
FIG. 1 is a schematic structural diagram of an electrode plate according to an embodiment of this application;
FIG. 2 is a cross-sectional view of an electrode plate according to an embodiment of this application;
FIG. 3 is a schematic structural diagram of an electrode assembly according to an embodiment of this application;
FIG. 4 is an assembling diagram of an electrode assembly according to an embodiment of this application;
FIG. 5 is a schematic perspective view of an electrode assembly according to an embodiment of this application;
FIG. 6 is a top view of an electrode assembly according to an embodiment of this application;
FIG. 7 is a cross-sectional view taken along a C-C line shown in FIG. 6; and
FIG. 8 is a partial schematic structural diagram of a battery cell according to an embodiment of this application.

List of reference signs:
100-electrode plate;
1-current collector; 101-first side edge; 102-second side edge; 103-third side edge; 104-fourth side edge; 10-tab; 10a-negative tab; 10b-positive tab; 11-first region; 12-second region; 13-tab group; 131-negative tab group; 132-positive tab group;
2-active material layer; 21-negative active material; 22-positive active material;
3-clearance notch; 31-negative electrode clearance notch; 32-positive electrode clearance notch;
4-electrode assembly; 41-negative electrode plate; 42-positive electrode plate; 43-separator; 44-first position; 45-second position;
5-packaging case; 50-seal region;
6-tab connecting piece; 60-sealant region.

### DETAILED DESCRIPTION

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. A direction or a positional relationship indicated by the terms such as "up", "down", "in", "out", "vertical", and "horizontal" used herein is a direction or positional relationship based on the illustration in the drawings, and is merely intended for ease or brevity of describing this application, but does not indicate or imply that the indicated device or component is necessarily located in the specified direction or constructed or operated in the specified direction. Therefore, such terms are not construed as a limitation on this application. In addition, the terms such as "first" and "second" are merely used for descriptive purposes, but not intended to indicate or imply relative importance. Terms such as "include" or "comprise" and similar expressions indicate that an element or object preceding such term encompasses elements or objects listed after such term, and equivalents thereof, but without excluding other elements or objects. Terms such as "connect" or "concatenate" and similar expressions are not limited to physical or mechanical connection, but may include electrical connection, whether direct or indirect. Unless otherwise defined, the terms "parallel", "perpendicular", "same", and similar features used herein include both the strict meanings of "parallel", "perpendicular", "same", and the like, as well as the cases with tolerances, such as "substantially parallel", "substantially perpendicular", and "substantially the same". For example, the term "substantially" may indicate that a difference between the objects being compared falls within 10% or 5% of an average value of the objects being compared. In the following description of embodiments of this application, when the number of components or elements is not specifically indicated, it means that the number of the components or elements may be one or more, or at least one. "At least one" refers to one or more, and "a plurality of" refers to at least two.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other. Evidently, the described embodiments are merely a part of but not all of the embodiments of the present invention. All other embodiments derived by a person of ordinary skill in the art based on the described embodiments of this application without making any creative efforts still fall within the protection scope of this application.

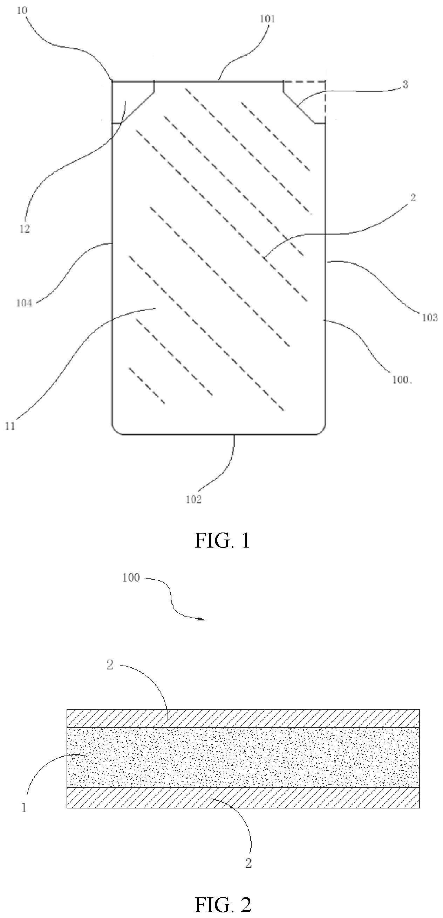

This application discloses a stacked-type battery cell. The stacked-type battery cell includes an electrode plate 100. As shown in FIG. 1 and FIG. 2, the electrode plate 100 includes a current collector 1 and an active material coating 2 covering the current collector 1. The current collector 1 includes a first region 11 covered with the active material coating 2 and a second region 12 not covered with the active material coating. The current collector 1 is foil. Surfaces of the electrode plate 100 are treated through processes such as laser cleaning, solvent wiping, or ripping off with adhesive tape, so as to remove the active material coating 2 from a local portion of the electrode plate 100 to form a second region 12. The exposed bare foil at the second region 12 forms a tab 10 of the electrode plate 100. The first region 11 is provided with a clearance notch 3. The clearance notch 3 is configured to expose the second region 12 of an adjacent electrode plate 100 when a plurality of electrode plates 100 are stacked together, thereby facilitating contact between two adjacent tabs 10 of the same polarity. In other words, the clearance notch 3 serves as a clearance space when two spaced-apart tabs 10 are gathered toward each other.

In existing stacked-type battery cells, the tabs are located outside the electrode assembly, and are prone to be subjected to impact and wobbling, posing relatively high safety risks. In addition, gathering the bare foil along one direction causes the gathered portion to become thicker, thereby occupying a relatively large space.

In this embodiment, after a bare cell is formed by stacking, the tabs 10 are accommodated within a main region of the bare cell, without requiring multi-tab intermediate-connection welding outside the main region at the head position of the bare cell, thereby improving space utilization. In addition, during mechanical abuse, the tab group formed by gathering the tabs is less prone to be subjected to impact, wobbling, or twisting, thereby avoiding safety problems such as short circuits between a tab and a current collector of the bare cell.

In this embodiment, two adjacent electrode plates 100 of the same polarity in the bare cell are spaced apart by an electrode plate 100 of an opposite polarity. The two tabs 10 of the same polarity can be gathered toward each other through a clearance notch 3 on the intermediate electrode plate 100 of the opposite polarity, thereby implementing electrical connection and forming a tab group.

In an existing stacked-type battery cell, because tabs 10 formed by multilayer bare foil are gathered in one direction and cut to form a tab group, with the increase of the number of stacked electrode plates 100, the thickness H of the battery cell increases, and the thickness of the tab group also increases accordingly. In this way, a gap K between the electrode assembly and the packaging case increases with the increase of the thickness H of the battery cell. Accordingly, a wasted area S0 inside the packaging case caused by the gap K also increases. The larger the wasted area S0, the lower the proportion of active material participating in electrochemical reactions, and the lower the energy density of the battery cell. S0 = K×W, where W is the width of the electrode plate 100.

Specifically, in the industry, when the thickness H of the battery cell is greater than 7 mm, the gap K1 between the electrode assembly and the packaging case is 4 mm, and the corresponding wasted area is S0 = K1 × W. When H ≤ 7 mm, the gap K2 between the electrode assembly and the packaging case is 2 mm, and the corresponding wasted area is S0 = K2 × W.

In this embodiment, the bare foil at the second region 12 of the electrode plate 100 forms an electrode plate 100. A battery cell manufactured using such an electrode plate 100 can reduce the gap K3 between the electrode assembly and the packaging case to 0.4 mm, and the corresponding wasted area is S0 = (0.4 mm) × W.

In this way, in contrast to the prior art, when the thickness H of the battery cell is greater than 7 mm, an area gain of the battery cell is calculated as: ΔS1 = (K1 - K3)W = (3.6 mm) × W. When the thickness H of the battery cell satisfies H ≤ 7 mm, the area gain of the battery cell is calculated as: ΔS1 = (K2 - K3)W = (1.6 mm) × W. The area gain of the battery cell refers to an incremental area of the active material. The larger the area gain of the battery cell, the higher the energy density of the battery cell of the same size.

However, the electrode plate 100 in this embodiment includes the first region 11 and the second region 12, and a portion of the active material needs to be washed off from the first region 11 and the second region 12 on the surface of the current collector 1. Consequently, the washing further increases an area loss ΔS2 in the space occupied by the active material. Herein, ΔS2 = S1 + S2, where S1 is the area of the clearance notch 3, and S2 is the area of the second region 12.

To ensure an increase in the energy density of the battery cell, this embodiment specifies that ΔS2 is less than ΔS1. Therefore, as long as the maximum value of S1+S2 is less than 3.6W, it is ensured that the overall energy density of a thick battery cell with H greater than 7 mm is increased in contrast to the prior art. Therefore, this embodiment specifies that the total area of the first region 11 and the second region 12 is less than 3.6 mm × W, that is, S1 + S2 < A × W, where A is 3.6 mm.

Further, in order to increase the overall energy density of a thin battery cell with H less than or equal to 7 mm, this embodiment specifies that the total area of the first region 11 and the second region 12 is less than 1.6 mm × W, that is, S1 + S2 < B × W, where B is 1.6 mm.

Further, in order to increase the overall energy density of a thin battery cell with H less than or equal to 7 mm, this embodiment specifies that the total area of the first region 11 and the second region 12 is less than 1.0 mm × W, that is, S1 + S2 < C × W, where C is 1.0 mm.

In this embodiment, the purpose of the clearance notch 3 is to expose the tab 10. Therefore, if the area of the second region 12 exceeds that of the first region 11, the excess part of the second region 12 is unable to be exposed, thereby being futile and causing unnecessary loss of the active material. Conversely, when the area of the first region 11 is larger than that of the second region 12, not only can the tab 10 be exposed, but a part of the active material is also exposed through the clearance notch 3, likewise causing unnecessary loss of the active material. Therefore, this embodiment specifies that the area S2 of the clearance notch 3 is equal to the area S1 of the second region 12, thereby ensuring maximization of the energy density of the battery cell.

The larger the overlapping area between two tabs 10, the higher the electrical connectivity between the two tabs 10. However, the larger the area of the clearance notch 3 or the second region 12, the greater the loss in the energy density of the battery cell. When the area of the clearance notch 3 is less than 5 mm², the area of the tab 10 is excessively small, thereby possibly resulting in poor contact between two adjacent tabs 10 and affecting the electrical connectivity of the tab group. When the area of the clearance notch 3 is greater than 100 mm², the overall energy density of the battery cell is made excessively low. Therefore, to ensure high electrical connectivity when the tabs 10 are gathered to form the tab group, this embodiment specifies that the area of the clearance notch 3 is 5 to 100 mm².

Considering the energy density of the battery cell, the area S1 of the clearance notch 3 and the area S2 of the second region 12 are preferably 5 to 60 mm². The value falling within this range ensures the highest energy density and relatively high electrical connectivity between the plurality of tabs 10, thereby meeting safety requirements.

Further, the area S1 of the clearance notch 3 and the area S2 of the second region 12 are preferably 10 to 40 mm². The value falling within this range further improves the energy density and the electrical connectivity performance of the tabs 10.

As shown in FIG. 1 and FIG. 2, the electrode plate 100 includes a plurality of corners. The clearance notch 3 and the second region 12 are located at two different corners respectively. Specifically, as shown in FIG. 1, this embodiment is further described below using an example in which the electrode plate 100 is rectangular. The electrode plate 100 includes a pair of parallel edges (a first side edge 101 and a second side edge 102) and another pair of parallel edges (a third side edge 103 and a fourth side edge 104) that altogether form a rectangle. The first side edge 101 connects one end of the third side edge 103 and one end of the fourth side edge 104, and the second side edge 102 connects the other end of the third side edge 103 and the other end of the fourth side edge 104. A junction between the first side edge 101 and the third side edge 103 forms a first corner, and a junction between the first side edge 101 and the fourth side edge 104 forms a second corner. The clearance notch 3 is provided at the first corner, and the second region 12 is located at the second corner. In this embodiment, as shown in FIG. 1, the specific structures of the clearance notch 3 and the second region 12 are chamfers disposed at the first corner.

In this embodiment, inclined edges of the chamfers of the clearance notch 3 and the second region 12 are polygons. The number of sides of each of the polygons ranges from 3 to 8. In other words, the inclined edges of the chamfers of the clearance notch 3 and the second region 12 separately may include 3 to 8 line segments.

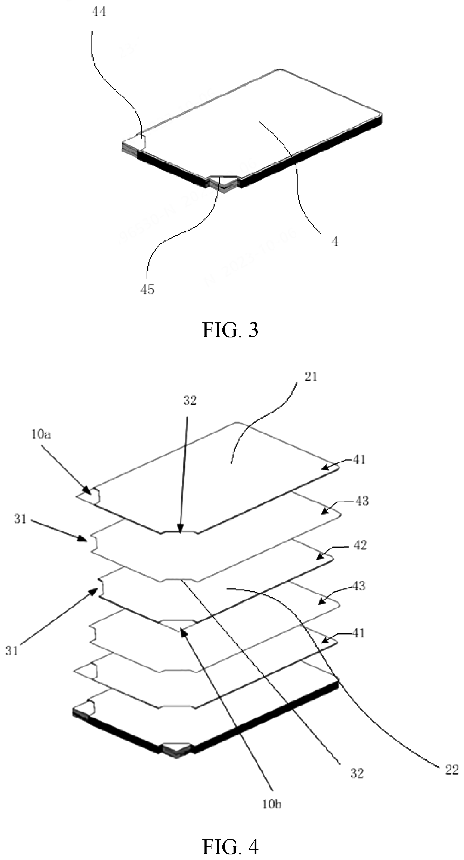

As shown in FIG. 3 and FIG. 4, an embodiment of this application further discloses an electrode assembly 4 formed by stacking the aforementioned electrode plates 100. The electrode assembly 4 includes a plurality of negative current collectors 41, a plurality of positive current collectors 42, and separators 43 that are stacked together. Each of the separators is located between a negative current collector 41 and a positive current collector 42.

The plurality of negative electrode plates 41, positive electrode plates 42, and separators 43 may be stacked in the following manner: ① a negative electrode plate 41, a separator 43, a positive electrode plate 42, and a separator 43 are stacked in this order cyclically; or ② a positive electrode plate 42, a separator 43, a negative electrode plate 41, and a separator 43 are stacked in this order cyclically; or ③ the upper and lower surfaces of a negative electrode plate 41 are joined to separators 43 respectively by hot-pressing, and then joined to positive electrode plates 42 and then joined to negative electrode plates 41 in sequence, and the plates are stacked in this order cyclically; or ④ the upper and lower surfaces of a positive electrode plate 42 are joined to separators 43 respectively by hot-pressing, and then negative electrode plates 41 and positive electrode plates 42 are stacked in sequence, and the plates are stacked in this order cyclically.

Specifically, as shown in FIG. 2, the active material coating 2 applied to the surface of the current collector 1 includes a negative active material 21 and a positive active material 22. As shown in FIG. 4, the tab 10 further includes a negative tab 10a and a positive tab 10b depending on the polarity of the electrode plate 100. Depending on the polarity of the tab 10 for which a clearance is provided, the clearance notch 3 further includes a negative electrode clearance notch 31 provided in the positive electrode plate 42 and a positive electrode clearance notch 32 provided in the negative electrode plate 41. The negative electrode clearance notch 31 is configured to provide a clearance for the negative tab 10a, and the positive electrode clearance notch 32 is configured to provide a clearance for the positive tab 10b.

Each negative electrode plate 41 is formed by coating a current collector 1 with a negative active material 21. Each positive electrode plate 42 is formed by coating a current collector 1 with a positive active material 22. When viewed along the thickness direction of the electrode assembly 4 (in a top view), the negative tab 10a of the negative electrode plate 41 is located at a first position 44, and the positive electrode clearance notch 32 provided in the negative electrode plate 41 is located at a second position 45. The positive tab 10b of the positive electrode plate 42 is located at the second position 45, and the negative electrode clearance notch 31 provided in the positive electrode plate 42 is located at the first position 44. In other words, the positions of the clearance notch 3 and the tab 10 on the negative electrode plate 41 are opposite to those on the positive electrode plate 42.

The separator 43 is provided with clearance notches 3 at both the first position 44 and the second position 45. In other words, the separator 43 is provided with a negative electrode clearance notch 31 at the first position 44 and with a positive electrode clearance notch 32 at the second position 45. In this way, the negative tab 10a and the negative electrode clearance notch 31 are both located at the first position 44, and the positive tab 11 and the positive electrode clearance notch 32 are both located at the second position 45. A plurality of tabs 10 located at the same position form one tab group 13. Specifically, a negative tab 10a gathers toward an adjacent negative tab 10a through the negative electrode clearance notches 31 of the separator 43 and the positive electrode plate 42 to form a negative tab group 131 corresponding to the negative electrode plates 41. A positive tab 10b gathers toward an adjacent positive tab 10b through the positive electrode clearance notches 32 of the separator 43 and the negative electrode plate 41 to form a positive tab group 132 corresponding to the positive electrode plates 42.

In a tab group 13, any two adjacent tabs 10 contact each other in at least a part of a region between the tabs to form an electrical connection. In other words, in the tab group 13 corresponding to the negative electrode plates 41, two adjacent negative tabs 10a overlap each other along a gathering direction.

As shown in FIG. 4, the tab group 13 is formed by inclining a plurality of tabs 10 at the same position toward a thickness center of the electrode assembly 4. The thickness center is a point in a middle region of the electrode assembly 4 in the thickness direction, the point being far away from outermost tabs 10 on two sides of the electrode assembly 4. In other words, the negative tab group 131 is formed by gathering the negative tabs 10a on two sides toward the negative tab 10a at the center. The positive tab group 132 is formed by gathering the positive tabs 10b on two sides toward the positive tab 10b at the center.

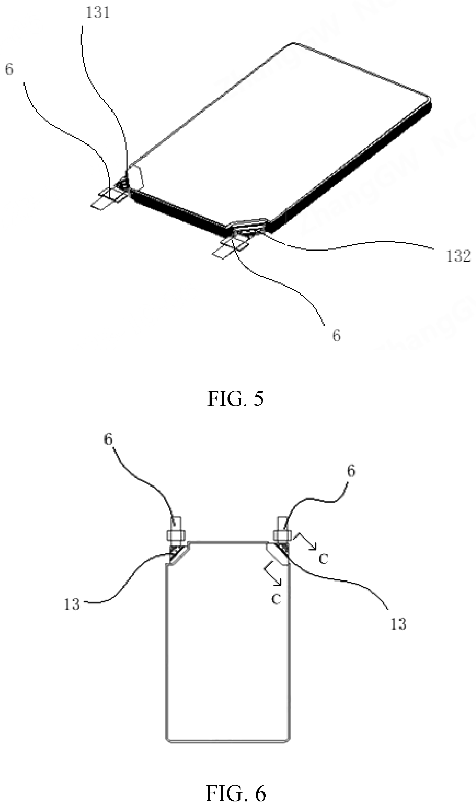

As shown in FIG. 5, a distance d5 from the gathered tab group 13 to the outermost tab 10 ranges from 0.3T to 0.7T, where T is the thickness of the electrode assembly 4.

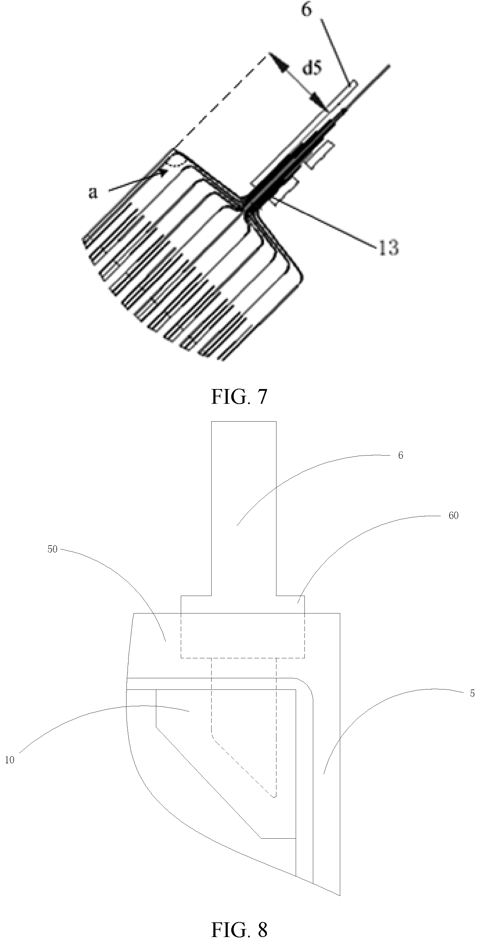

In addition, in this embodiment, as shown in FIG. 7, for any tab 10 in a tab group 13, a preset angle a is formed between the tab and a surface of a current collector of the electrode plate at which the tab is located. The preset angle a is greater than 90°, thereby avoiding a misalignment tolerance between adjacent tabs 10 from causing an edge of the tab 10 to warp outward. The warp results in poor contact between adjacent tabs 10, and impairs electrical conductivity of the tab group 13. By setting the angle a to be greater than 90°, this application makes two adjacent tabs 10 tend to be parallel to each other along a gathering direction, thereby achieving tighter contact between the tabs, reducing the resistance of the tab group 13, and improving charging and discharging efficiency.

An embodiment of this application further discloses a battery cell. As shown in FIG. 5 and FIG. 6, the battery cell includes an electrode assembly 4, a packaging case 5 configured to accommodate the electrode assembly 4, and at least two tab connecting pieces 6. Each tab connecting piece 6 is electrically connected to one tab group 13 of the electrode assembly 4 to form an electrical energy transmission channel. Specifically, as shown in FIG. 8, an electrolyte is injected into the packaging case 5, and the electrode assembly 4 is packaged in the packaging case 5. One end of the tab connecting piece 6 is located inside the packaging case 5 and is electrically connected to the tab group 13. The tab connecting piece 6 is electrically connected to the tab group 13 by laser welding or ultrasonic welding. The position of the electrical connection between the tab connecting piece and the tab group may be at the center of the tab group 13 or at two side surfaces of the tab group 13. The tab connecting piece 6 is provided with a sealant region 60. The sealant region 60 is located in a seal region 50 of the packaging case 5, thereby improving the sealing performance of the seal region 50 and preventing electrolyte leakage during dropping of the battery cell.

In an actual production, a stacked-type battery cell needs to be subjected to a drop test and a tab connecting plate sealing performance test.

The test processes are as follows:
(1) Drop test: Fully charging a sample according to a specified test method, and then dropping the sample freely from a drop height of 1 m onto a concrete slab (for a battery pack with a capacity of 1000 mAh or above, the drop height is 1 m; for a battery pack with a capacity of 1000 mAh or less, or for a portable electronic product with a predetermined use height greater than 1.0 m, the drop height is 1.5 m). For a cylindrical cell sample and a button cell sample separately, leaving each of the two end surfaces of the sample to land on the concrete slab once, and by leaving the cylindrical surface to land on the concrete slab twice, resulting in a total of four drop tests. For a prismatic cell sample and a pouch cell sample, leaving each surface of the sample to land on the concrete slab once, resulting in a total of six drop tests. For the battery pack that has undergone the above test, performing one additional discharge-charge cycle according to the specified charging and discharging method, and performing a drop test again.
   Pass criteria: The battery does not catch fire or explode. The battery pack does not catch fire, explode, or leak electrolyte. The battery cell is qualified if the drop test pass rate of the battery cell is greater than or equal to 80%.
(2) Tab connecting plate sealing performance test

Based on an actual production process of battery cells, acquiring the proportion P by which the sealant region 60 extends beyond the seal region 50 on the tab connecting plate 6.

Pass criteria: When P ≤ 10%, the sample is considered qualified for mass production.

The area S1 of the clearance notch 3 and the area S3 of the second region 12 affect the size of the tab, and the size of the tab 10 affects the relative position between the sealant region 60 of the tab connecting piece 6 and the seal region 50. Therefore, the size of the tab 10 affects the sealing performance of the battery cell. Specifically, an excessively small tab 10 leads to an excessively small contact area between the tab group 13 and the tab connecting piece 6, and potentially causes detachment of the tab connecting piece 6 from the tab group 13 during a drop test, thereby frustrating operation of the battery cell. In addition, the excessively small tab poses a risk of fire or explosion caused by a short circuit between the positive electrode and the negative electrode, thereby reducing the drop test pass rate. Moreover, an excessively small size of the tab 1 may cause the tab connecting piece 6 to move out of the desired position, and increase the proportion by which the sealant region 60 extends beyond the seal region 50, thereby impairing the sealing performance of the battery cell, and resulting in a low pass rate of the sealing performance test. However, if the size of the tab 10 is set to be excessively large, although the large size can significantly increase the drop test pass rate and reduce the proportion by which the sealant region 60 extends beyond the seal region 50, the large tab excessively occupies the space available for electrochemical reactions, thereby reducing the energy density of the battery cell.

Therefore, the size of the tab 10 should be neither excessively large, which reduces the energy density of the battery cell, nor excessively small, which causes the product to fail to meet the safety requirements required by the drop test and by the sealing performance test of the tab connecting piece 6. For this reason, the applicant of this application has conducted extensive experiments on the size of the tab 10. The experimental data are shown in the following table:

| Sample number (group) | S1 (mm²) | S2 (mm²) | Energy density level (in descending order) | Drop test pass rate | Failure rate of sealing performance test of tab connecting piece |
|---|---|---|---|---|---|
| 1 | 5 | 5 | 1 | 80% | 10% |
| 2 | 10 | 10 | 2 | 90% | 8% |
| 3 | 30 | 30 | 3 | 90% | 5% |
| 4 | 40 | 40 | 4 | 100% | 0% |
| 5 | 60 | 60 | 5 | 100% | 0% |
| 6 | 70 | 70 | 6 | 100% | 0% |
| 7 | 85 | 85 | 7 | 100% | 0% |
| 8 | 100 | 100 | 9 | 100% | 0% |
| 9 | 3 | 3 | 1 | 50% | 50% |
| 10 | 110 | 110 | 10 | 100% | 0% |

In this embodiment, the energy density level is a relative comparison concept, and indicates a difference between the energy density of a current sample and an optimal energy density.

The higher the energy density level, the greater the difference between the energy density of the current sample and the optimal energy density, and correspondingly, the lower the energy density of the sample. Conversely, the lower the energy density level, the closer the sample is to the optimal energy density. When the energy density level is greater than or equal to level 10, it indicates that there is a significant difference between the energy density of the current sample and the optimal energy density, and the product is evaluated as unqualified. In other words, the energy density level ranging from 1 to 9 indicates a qualified product. According to the experimental data, when the area S1 of the clearance notch 3 and the area S2 of the second region fall within the range of 5 to 100 mm², the energy density level, drop test pass rate, and sealing performance test failure rate all meet the requirements. When S1 and S2 fall within the range of 5 to 60 mm², the energy density of the battery cell is relatively high. When S1 and S2 fall within the range of 10 to 40 mm², the energy density, drop test pass rate, and sealing performance test results are all at relatively high levels.

An embodiment of this application further discloses a secondary battery and an electrical device containing the secondary battery. The secondary battery includes a battery case and the aforementioned battery cell accommodated in the battery case.

Finally, it is noted that the foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

## Claims

1. A battery cell, comprising a plurality of electrode plates stacked together, wherein each of the electrode plates comprises a current collector and an active material coating, **characterized in that** the electrode plate comprises a first region covered with the active material coating and a second region not covered with the active material coating;
the first region is provided with a clearance notch, the clearance notch is configured to avoid the second region of an adjacent electrode plate, and the second region forms a tab of the battery cell;
among the plurality of stacked electrode plates, for two adjacent electrode plates, the first region of one of the electrode plates is provided with the clearance notch to expose the second region of the other electrode plate;
a width of the electrode plate is W mm, an area of the clearance notch is S1 mm², an area of the second region is S2 mm², and a thickness of the battery cell is H;
when H > 7 mm, a relationship S1 + S2 < A × W is satisfied, wherein A is 3.6 mm;
or, when H ≤ 7 mm, a relationship S1 + S2 < B × W is satisfied, wherein B is 1.6 mm.

2. The battery cell according to claim 1, **characterized in that** H ≤ 7 mm, and S1 + S2 < C × W, wherein C is 1.0 mm.

3. The battery cell according to claim 1, **characterized in that** an area S1 of the clearance notch is 5 mm² to 100 mm², and an area S2 of the second region is 5 mm² to 100 mm².

4. The battery cell according to claim 1, **characterized in that** an area S1 of the clearance notch is 5 mm² to 60 mm², and an area S2 of the second region is 5 mm² to 60 mm².

5. The battery cell according to claim 1, **characterized in that** an area S1 of the clearance notch is 10 mm² to 40 mm², and an area S2 of the second region is 10 mm² to 40 mm².

6. The battery cell according to any one of claims 1 to 5, **characterized in that** the electrode plate comprises a plurality of corners,
wherein the clearance notch is provided at one of the corners of the electrode plate, and the second region is located at another corner of the electrode plate.

7. The battery cell according to claim 6, **characterized in that** the electrode plate comprises a first side edge and a second side edge parallel to each other, a third side edge perpendicular to the first side edge, and a fourth side edge perpendicular to the second side edge,
wherein, the clearance notch is located at a first corner formed by the first side edge and the third side edge, and the second region is located at a second corner formed by the first side edge and the fourth side edge.

8. The battery cell according to claim 7, **characterized in that** a first direction parallel to the third side edge and a second direction parallel to the first side edge are defined for the electrode plate;
a maximum dimension of the second region in the first direction is 1 mm to 15 mm, and a maximum dimension of the second region in the second direction is 1 mm to 15 mm; and
in the first direction, a distance from one end, adjacent to the third side edge, of the first side edge to the third side edge is 1 mm to 15 mm; and in the second direction, a distance from one end, adjacent to the first side edge, of the third side edge to the first side edge is 1 mm to 15 mm.

9. The battery cell according to claim 8, **characterized in that** the maximum dimension of the second region in the first direction is 3 mm to 10 mm, and the maximum dimension of the second region in the second direction is 3 mm to 10 mm; and
in the first direction, a distance from one end, adjacent to the third side edge, of the first side edge to the third side edge is 3 mm to 10 mm; and in the second direction, a distance from one end, adjacent to the first side edge, of the third side edge to the first side edge is 3 mm to 10 mm.

10. The battery cell according to any one of claims 1 to 5, **characterized in that** the clearance notch and the second region are both in a shape of a polygon,
wherein, a number of line segments constituting the polygon is 3 to 8.

11. The battery cell according to any one of claims 1 to 5, **characterized in that** the battery cell further comprises an electrode assembly, and the electrode assembly comprises: a plurality of negative electrode plates, positive electrode plates, and separators that are stacked together, and each of the separators is located between a negative electrode plate and a positive electrode plate;
among the plurality of negative electrode plates, each negative electrode plate is formed by a current collector coated with a negative active material; when viewed along a thickness direction of the electrode assembly, a tab of the negative electrode plate is located at a first position, and the clearance notch provided in the negative electrode plate is located at a second position;
among the plurality of positive electrode plates, each positive electrode plate is formed by a current collector coated with a positive active material; when viewed along the thickness direction of the electrode assembly, a tab of the positive electrode plate is located at the second position, and the clearance notch provided in the positive electrode plate is located at the first position;
among the separators, when viewed along the thickness direction of the electrode assembly, each of the separator is provided with the clearance notch at both the first position and the second position; and
the plurality of negative electrode plates and positive electrode plates are alternately stacked together, each of the separators is located between a negative electrode plate and a positive electrode plate; a plurality of tabs located at a same position form one tab group; and in one of the tab groups, any two adjacent tabs contact each other in at least a part of a region between the two tabs to form an electrical connection.

12. The battery cell according to claim 11, **characterized in that** the tab group is formed by inclining a plurality of tabs at a same position toward a thickness center of the electrode assembly,
wherein the thickness center is any point selected in a middle region of the electrode assembly, the middle region being far away from two side surfaces of the electrode assembly in the thickness direction.

13. The battery cell according to claim 11, **characterized in that**, in the thickness direction, a distance between the tab group and one side surface of the electrode assembly falls within a range of 0.3T and 0.7T,
wherein T is the thickness of the electrode assembly.

14. The battery cell according to claim 11, **characterized in that**, for any tab in the tab group, an angle between the tab and a surface of a current collector of the electrode plate at which the tab is located is greater than 90°.

15. The battery cell according to claim 11, **characterized in that** the battery cell further comprises:
a packaging case, wherein the electrode assembly is accommodated in the packaging case; and
at least two tab connecting pieces,
wherein, one of the tab connecting pieces is electrically connected to one tab group of the electrode assembly, one end of the tab connecting piece is electrically connected to the tab group, and another end of the tab connecting piece extends out of the packaging case to form an electrical energy transmission channel.

16. The battery cell according to claim 15, **characterized in that** the tab connecting piece is disposed at one of the following positions:
an upper surface of the tab group in a thickness direction;
a lower surface of the tab group in the thickness direction; or
a position between any two adjacent tabs inside the tab group.

17. A secondary battery, **characterized in that** the secondary battery comprises:
a battery housing; and
the battery cell according to any one of claims 1 to 16, wherein the battery cell is accommodated in the battery housing.

18. An electrical device, **characterized in that** the electrical device comprises the secondary battery according to claim 17.
